# EUROPEAN PATENT APPLICATION

(11) **EP 3 333 304 A1**
(43) Date of publication of application: **13.06.2018**
(21) Application number: 16834634.4
(22) Date of filing: 08.08.2016
(51) Int. Cl.: D06F 37/38, D06F 37/36, D06F 37/30

(54) **WASHING MACHINE**

(30) Priority: 07.08.2015 JP 2015157146
(71) Applicant: Qingdao Haier Washing Machine Co., Ltd., Shandong 266101 (CN); Aqua Co., Ltd., Chiyoda-ku Tokyo 100-0005 (JP)
(72) Inventor: ONISHI, Takashi, Tokyo 100-0005 (JP); BAMBA, Yoshikazu, Tokyo 100-0005 (JP); YONEZAWA, Takaaki, Tokyo 100-0005 (JP); OE, Katsumi, Tokyo 100-0005 (JP)
(74) Representative: HGF Limited
(86) International application number: PCT/CN2016/094007
(87) International publication number: WO 2017/025010

(57) **Abstract**

A washing machine is provided. The washing machine adopts an induction motor (72) to achieve efficient operation as that achieved by using a frequency converter. The washing machine includes: an input shaft (80m) configured to supply rotation power to a rotation part (80) that rotates washings; an induction motor (72), configured to rotate in a forward direction and a backward direction and served as a power source of the rotation part (80); a transmission (8) arranged between an output shaft (72m) of the induction motor (72) and the input shaft (80m) of the rotation part (80). The transmission is configured to change speed of the induction motor by decreasing a reduction ratio along with startup of the induction motor. The washing machine is designed so that the torque at a driven side is multiplied in a low-efficiency low rotation region of the induction motor (72) and the low rotation region is rapidly passed through to move to a high rotation region.

## Description

### TECHNICAL FIELD

The present disclosure relates to a washing machine designed in such manner so that an induction motor is efficiently used.

### BACKGROUND

In the past, a cheap induction motor is usually used in a washing machine. An induction motor is an alternating current (AC) motor. In the induction motor, induced current is generated in a rotating magnetic field established by coils through which alternating current flows, and supplied to a rotor side, so that the induction motor is driven by the interaction of the rotating magnetic field and a magnetic field generated by the induced current. In general, rotation power generated on an output shaft of such motor is transferred to input shafts of a rotation part such as an agitating wing, a dewatering drum and the like via a pair of pulley and driving belt and via a decelerator (see patent literature 1).

In another aspect, a variable frequency controlled member is also provided in the washing machine. The variable frequency control is such a control mode in which an alternating current is converted into a direct current, and then the direct current is converted into an alternating current of any frequency to drive the motor (see patent literature 2).

However, in the mode of the induction motor, since a pulley diameter ratio is fixed, starting of the motor is slow and more operations run in the low rotation region with low efficiency. In addition, especially for a washing machine which implements a washing process and a rinsing process while switching rotation in a forward direction and a backward direction, since a starting characteristic is affected greatly, a defect that a problem of poor efficiency cannot be solved exists.

In another aspect, although the washing machine of the variable frequency control mode can be set at a frequency at which the washing machine operates at high efficiency, a defect of high price on the whole exists due to complex control system.

### Related Technical Literature

### Patent Literature

Patent Literature 1: Japanese Laid-open patent publication No. 2002-166089
Patent Literature 2: Japanese Laid-open patent publication No. 04-322696

### SUMMARY

### Problems to be solved by the disclosure

The present disclosure focuses on the above problems, and aims to provide a washing machine formed with a new structure. The washing machine adopts an induction motor to achieve efficient operation as that achieved when a frequency converter is adopted.

### Solution for solving the problems

To achieve the above-mentioned purpose, the present disclosure adopts the following solution.

Namely, the washing machine of the present disclosure includes: an input shaft configured to supply rotation power to a rotation part for rotating washings; an induction motor configured to rotate in a forward direction and a backward direction and be served as a power source of the rotation part; and a transmission arranged between an output shaft of the induction motor and the input shaft of the rotation part, and the transmission is configured to change speed by decreasing a reduction ratio along with startup of the induction motor.

As a preferred embodiment of the transmission, for example, the transmission includes: a variable driving side pulley unit arranged on a side of the output shaft; a variable driven side pulley unit arranged on a side of the input shaft; and a driving belt. The transmission is configured to transfer power between two pulley units, and change a pulley diameter ratio according to rotating speed of the output shaft or the input shaft.

To actively use such situation in which inertial weight is increased, preferably, a control part configured to drive the induction motor through a driver is provided, so as to control the rotation part to be driven in the backward direction repeatedly on the basis of each of the following working units: a specified driving time preset for the rotation part and a specified inertial rotation time until the rotation part stops.

In this case, the specified driving time is preferably set to be equal to or longer than a time during which a gear ratio of the transmission is changed from a maximum to a minimum.

### Effects of the disclosure

According to the present disclosure described above, even if startup characteristics of the induction motor are constant, by incorporating the transmission, the torque at a driven side is multiplied in a low-efficiency low rotation region of the induction motor, and the low rotation region is rapidly passed through. Thus, the torque is multiplied to enhance washing force of washings after the startup, and then the torque rapidly moves to a high rotation region with high motor efficiency. Therefore, the reduction of power consumption is achieved. Since the washing machine repeatedly performs a special action of forward rotation/backward rotation within short time, the above effect can appear repeatedly. Therefore, according to the present disclosure, even if the induction motor with a cheap structure is adopted, efficient operation achieved by adopting a frequency converter can be achieved.

Compared with a structure with a fixed pulley, in the present disclosure that the transmission is composed of the variable pulley unit and the driving belt, the inertial weight is only added on part including key components required for the variable structures. Therefore, an inertial moment is also increased when the washings are pulled to rotate thereby further enhancing the washing effect.

In this case, assuming that the driving time is identical, the time until the rotation part stops will increase along with the part with the increased inertial weight. If the rotation part rotates in the backward direction for the inertial stop time same as that of the fixed pulley, the rotation part rotates backward in inertial rotation. However, as long as backward rotation is performed after the rotation part stops through the control part of the present disclosure, the inertial rotation caused by the inertial weight can be effectively used for washing. Moreover, as long as this setting is adopted, since the speed of the induction motor may be 0, the torque can be multiplied when the induction motor is started each time.

Especially, since the gear ratio is changed and the rotating speed required for the rotation part is reached after the induction motor is efficiently started as long as the gear ratio is used to the largest extent from the maximum to the minimum, a time ratio of the high rotation region with high motor efficiency can be increased and the reduction of the power consumption is realized.

### BRIEF DESCRIPTION OF DRAWINGS

FIG. 1 is a local longitudinal sectional view illustrating a main part of a washing machine according to an embodiment of the present disclosure under a state in which a transmission is started;
FIG. 2 is an overall sectional view illustrating an approximate structure of a washing machine without a transmission compared with the above embodiment;
FIG. 3 is a description diagram illustrating a control system of a motor in the embodiment;
FIG. 4 is a diagram illustrating a state in which the transmission is started in the embodiment; and
FIG. 5 is a chart illustrating a characteristic of an induction motor used in the same embodiment.

### List of reference numerals

8: transmission; 72: induction motor; 72m: output shaft; 73m: input shaft; 80: rotation part; 80m: input shaft; 81: driving side pulley unit; 82: driven side pulley unit; 83: driving belt; 91: control part; 92: driver; T1, T3: driving time; and T2, T4: inertial rotation time.

### DETAILED DESCRIPTION

An embodiment of the present disclosure is described below with reference to drawings.

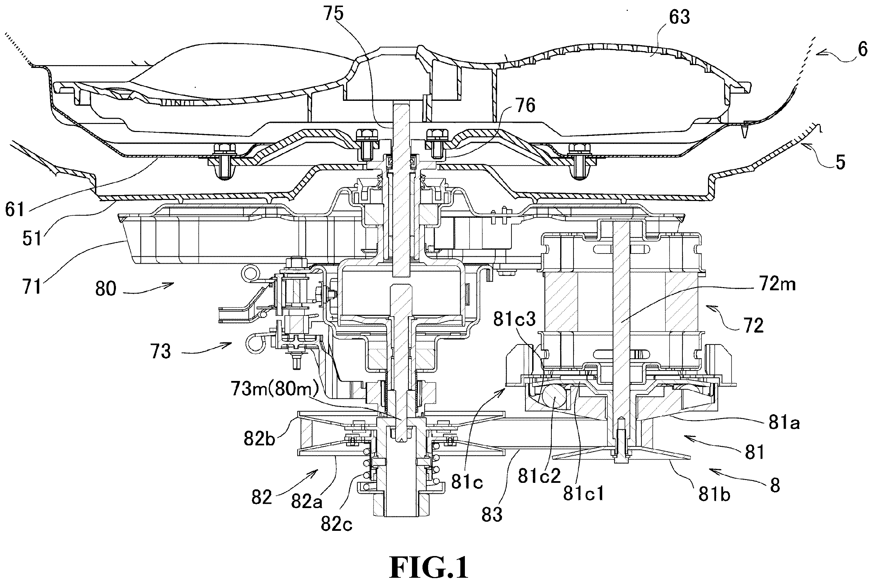

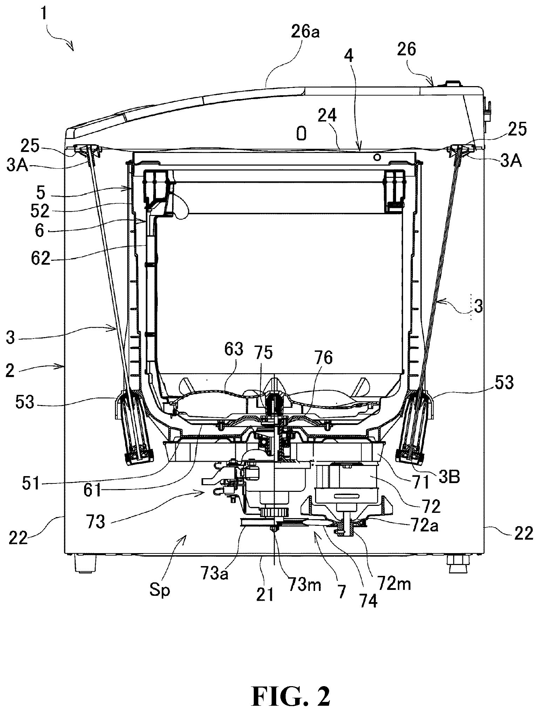

FIG. 1 is a local longitudinal sectional view illustrating a washing machine adopting a transmission 8 according to an embodiment of the present disclosure. FIG. 2 is an overall longitudinal sectional view illustrating a washing machine 1 without adopting such a transmission.

Firstly, a basic structure about the washing machine 1 in FIG. 2 is described. The washing machine equipped with the transmission of the present embodiment is described based on the washing machine 1.

The washing machine 1 is a so-called vertical washing machine, and has a housing 2 and a washing drum unit 4 suspended and supported by a hoisting rod 3 inside the housing 2. The washing drum unit 4 includes: a bottomed outer drum 5 with substantially cylindrical shape, a bottomed inner drum 6 with substantially cylindrical shape arranged coaxially with the outer drum 5 inside the outer drum 5, and a driving mechanism 7 arranged at a bottom of the outer drum 5.

The housing 2 is composed of a substantially-rectangular bottom surface 21 and four wall surfaces 22 which erect from the bottom surface 21, and presents a box shape having an inner space Sp with an upper opening. A suspending and fixing part 25 with hooked shape is arranged at each of four corners near an upper end 24 of the housing 2. The suspending and fixing part 25 is served as a fulcrum for suspending the hoisting rod 3 by fixing a basal end 3A of the hoisting rod 3 in a suspended manner.

A cover 26 integrated with an operation panel is arranged at an upper part of the housing 2, and a part of the cover 26 is configured as an opening/closing cover 26a through which the inner space Sp is opened and closed like operating a folding door.

The outer drum 5 of the washing drum unit 4 is a bottomed component with substantially cylindrical shape, and includes: a bottom plate 51 forming the bottom, which is substantially circular when observed from top; and a circumferential wall 52 which erects from an edge of the bottom plate 51. Hooked supporting parts being suspended 53 are integrally arranged at four positions in an equalization mode at a lower part of the circumferential wall 52 when observed from top. The supporting parts being suspended 53 can be used to install a top end 3B of the hoisting rod 3.

The inner drum 6 forms a so-called washing and dewatering drum configured as substantially cylindrical shape with a bottom. The inner drum 6 includes: a bottom plate 61 served as the bottom, which is substantially circular when observed from top; and a circumferential wall 62 which erects from an edge of the bottom plate 61. The inner drum 6 is arranged coaxially with the outer drum 5 inside the outer drum 5, and is rotatable by means of being supported by the outer drum 5 through the driving mechanism 7. A plurality of water through holes not shown, through which water in the inner drum 6 are discharged, are formed in the bottom plate 61 and the circumferential wall 62. In addition, an agitating wing 63 which is generally called as a pulsator is coaxially arranged directly above the bottom plate 61 of the inner drum 6.

The driving mechanism 7 includes a basal component 71 installed on a lower surface of the bottom plate 51 of the outer drum 5, an induction motor 72 installed on the basal component 71, and a power distribution part 73 including a clutch. An output shaft 72m of the induction motor 72 has a fixed pulley 72a, and an input shaft 73m of the power distribution part 73 has a fixed pulley 73. A flat driving belt 74 is wound around the fixed pulleys 72a, 73a to mutually transfer power.

The power distribution part 73 is configured to distribute, via the clutch, rotation power supplied to the input shaft 73a to two input shafts 75, 76 arranged coaxially, so that the first input shaft 75 on an inner side is connected with a center of the above agitating wing 63, and a second input shaft 76 on an outer side is connected with the bottom plate 61 of the inner drum 6. By supplying the rotation power of the induction motor 72 to the input shaft 73a through the fixed pulley 72a, the driving belt 74 and the fixed pulley 73a, the power distribution part 73 selectively switches the rotation power to the first input shaft 75 only or switches the rotation power to both of the first input shaft 75 and the second input shaft 76 according to an instruction from the control unit. Thus, only the agitating wing 63 rotates in the washing machine 1 during a washing process, while the inner drum 6 and the agitating wing 63 integrally rotate during dewatering. A rotation part 80 of the present disclosure is equivalent to the agitating wing 63 in the washing and rinsing processes, and equivalent to the agitating wing 63 and the inner drum 6 in the dewatering process.

In the present embodiment, in such a structure, a power transmission part between the output shaft 72m of the induction motor 72 and the input shaft 80m of the rotation part 80 (the input shaft 73m of the power distribution part 73) is provided with a transmission 8 shown in FIG. 1. Common components in FIG. 1 and FIG. 2 are marked with same reference numerals.

The transmission 8 is adopted to improve characteristics of the induction motor 72. For the induction motor 72, since a pulley diameter ratio of the fixed pulleys 72a and 73a is always constant and an effective torque first occurs only in the high rotation region, starty is slow and more actions occur in the low rotation region with large impact current. In addition, especially for the washing machine 1 which executes the washing process and the rinsing process while switching rotation in the forward direction and the backward direction, a poor starting characteristic may cause a great influence on the whole.

Therefore, the transmission 8 is provided to change the speed so that the reduction ratio is reduced from 1: 3.4 to 1: 1.7 as described below along with the startup. In this way, even if the starting characteristics of the induction motor 72 are constant, the torque supplied to the input shaft 73m at the driven side is multiplied in the low-efficiency low rotation region of the induction motor 72 so that the low rotation region is rapidly passed through. As a result, through the torque multiplication, the cleaning power for the washings is increased after the startup, and then the induction motor 72 rapidly moves to the high rotation region with high efficiency so as to achieve reduction of power consumption of the induction motor. Since the washing machine 1 repeatedly performs a special action of forward rotation/backward rotation within a short time, the above effect can be obtained repeatedly. Therefore, efficient operation achieved when a frequency converter is adopted can also be achieved even if a cheap structure adopting the induction motor 72 is used.

The transmission 8 is an automatic transmission that changes the gear ratio according to the rotating speed of the output shaft 72m of the induction motor 72. Specifically, the transmission 8 includes a variable driving side pulley unit 81 arranged on the output shaft 72m side, a variable driven side pulley unit 82 arranged on the input shaft 73m side, and a V type driving belt 83 for transferring the power between two pulley units 81, 82. The transmission 8 changes the pulley diameter ratio according to the rotating speed of the output shaft 72m so that the reduction ratio is reduced. Compared with the power transmission part in FIG. 2 merely in terms of structures, the fixed pulley 72a, the flat driving belt 74 and the fixed pulley 73a are removed, while the driving side pulley unit 81, the driven side pulley unit 82 and the V type driving belt 83 are installed.

When the structure of the transmission with the so-called V type driving belt is compared with the structure with the fixed pulleys shown in FIG. 2, the inertial weight of the two variable pulley units 81, 82 is only added on part of elements required for a variable structure. Therefore, an inertial torque is increased when the washings are pulled to rotate, thereby contributing to improvement of the cleaning effect.

The driving side pulley unit 81 includes: a driving side movable pulley 81a, which is connected with the output shaft 72m of the induction motor 72 so that the driving side movable pulley 81a rotates together with the output shaft 72m and moves along an axial direction; a driving side fixed pulley 81b, which is fixed to the output shaft 72m and opposed to the driving side movable pulley 81a so that the driving side fixed pulley 81b rotates together with the output shaft 72m; and a rotating speed sensing part 81c for exerting an axial displacement corresponding to the rotating speed of the output shaft 72m to the driving side movable pulley 81a.

Each of opposing surfaces of the driving side movable pulley 81a and the driving side fixed pulley 81b forms an inverted dish shape so that the distance between the opposing surfaces increases as the distance from the center in the radial direction increases.

The rotating speed sensing part 81c is composed of the following components: a speed changing plate 81c1 arranged at a position opposed to the driving side movable pulley 81 a and having a supporting surface substantially orthogonal to the output shaft 72m; a weight roller 81c2, which is arranged between the speed changing plate 81c1 and the driving side movable pulley 81a so that the weight roller 81c2 rotates along with the speed changing plate 81c1 and the driving side movable pulley 81a and is capable of rotating radially; and a tapered guiding surface 81c3 located at the driving side movable pulley 81a side and located at a position of adding the weight roller 81 c2, the tapered guiding surface 81 c3 is exerted a force by the weight roller 81c2 toward the driving side fixed pulley 81b as the weight roller 81c2 is away from the center.

In another aspect, the driven side pulley unit 82 includes: a driven side movable pulley 82a, which is connected with the input shaft 80m of the rotation part 80 (i.e., the input shaft 73m of the power distribution part 73) so that the driving side movable pulley 82a rotates together with the input shaft 80m of the rotation part 80 and moves along the axial direction; a driven side fixed pulley 82b, which is fixed to the input shaft 73m and opposed to the driven side movable pulley 82a so that the driven side fixed pulley 82b rotates together with the input shaft 73m; and a spring 82c for elastically exerting force to the driven side fixed pulley 82b from the driven side movable pulley 82a.

Each of opposing surfaces of the driven side movable pulley 82a and the driven side fixed pulley 82b also forms an inverted dish shape so that the distance between the opposing surfaces increases as the distance from the center in the radial direction increases..

The V type driving belt 83 is formed as an unlimited track shape with glass fiber, KEVLAR fiber and the like with good heat resistance and abrasion resistance, and a plurality of teeth are arranged in an inner circumference.

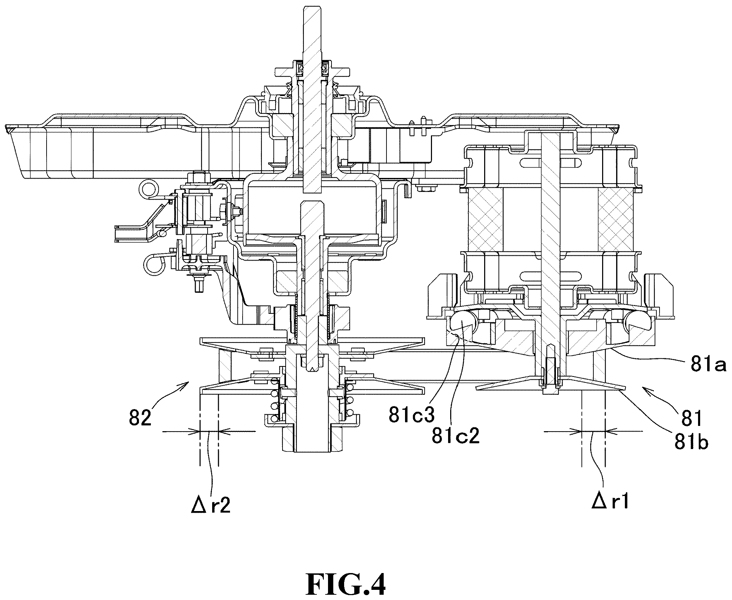

FIG. 1 illustrates a state before the induction motor is started. FIG. 4 illustrates a state after the induction motor is started. The driven side movable pulley 82a is originally in a state shown in FIG. 1 in which the driven side movable pulley 82a is applied with a force by the spring 82c and the distance relative to the driven side fixed pulley 82b is shortened; and the pulley diameter of the driven side pulley unit 82 clamped by the V type driving belt 83 is substantially increased. Since the opposing driving side movable pulley 81a does not exert centrifugal force, the weight roller 81 c2 is located at a position near the output shaft 72m, the V type driving belt 83 is in a state of being pulled to both sides of the driven side pulley unit 8 to increase the distance relative to the driving side fixed pulley 81b, and the pulley diameter of the driving side pulley unit 81 clamped by the V type driving belt 83 is substantially decreased. At this moment, the pulley diameter ratio of the driving side to the driven side in the present embodiment is 1: 3.4. Compared with pulley diameter ratio when the induction motor is started described below, the rotating speed of the driven side is lower relative to the rotating speed of the driving side, and the reduction ratio is larger.

When the induction motor 72 is started under the state, through the rotation of the driving side movable pulley 81 a, the weight roller 81 c2 moves to an outer circumferential side as shown in FIG. 1 to FIG. 4 due to the centrifugal force; and the driving side movable pulley 81a is pressed to the weight roller 81 c2 via the guiding surface 81 c3 so as to move toward the driving side fixed pulley 81b. As a result, the distance relative to the driving side fixed pulley 81b is decreased, so that the substantial pulley diameter of the driving side pulley unit 81 is only increased by Δr1 relative to the V type driving belt 83. Next, the V type driving belt 83 is pulled to the driving side pulley unit 81 side, and the driven side movable pulley 82a resists elastic force of the spring 82c to move so that the distance relative to the driven side fixed pulley 82b is increased like FIG. 1 to FIG. 4. Therefore, the substantial pulley diameter is only decreased by Δr2 relative to the V type driving belt 83. At this moment, the pulley diameter ratio of the driving side to the driven side in the present embodiment is 1: 1.7. Compared with the diameter ratio during the startup described above, the rotating speed of the driven side becomes higher relative to the rotating speed of the driving side, and the reduction ratio becomes smaller. During this period, the pulley diameter ratio (i.e., the reduction ratio) varies linearly.

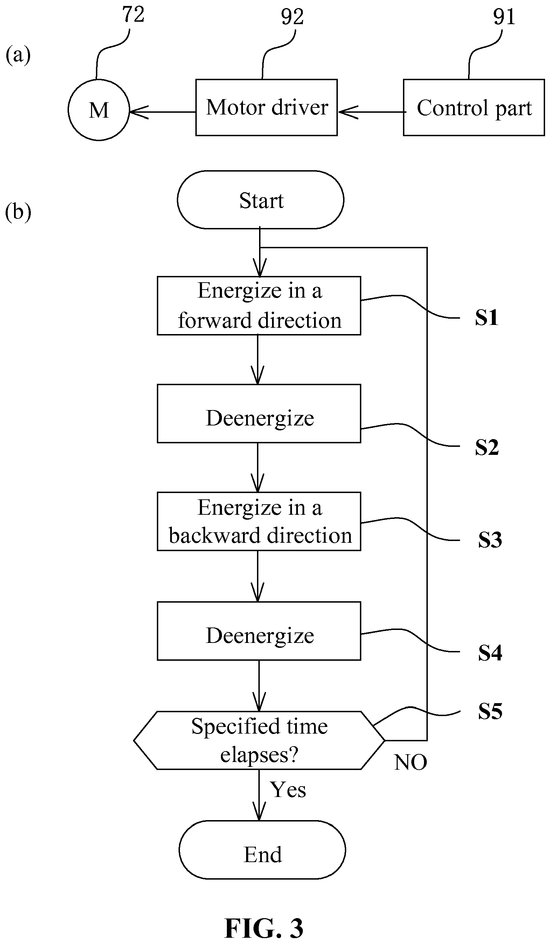

On the other hand, as shown in FIG. 3(a), the induction motor 72 is configured to be controlled by a control unit 91 via a motor driver 92. The control part 91 is, for example, a microcomputer for controlling all washing programs of the washing machine 1, and is used for switching the energizing/deenergizing of the induction motor 72. FIG. 3(b) illustrates a flow stored in the control part 91, and is a flow chart illustrating a summary of energizing control for the induction motor 72 in the washing process.

Firstly, the induction motor 72 is energized in the forward direction in step S1. After a specified driving time T1 elapsed since the energizing, the induction motor 72 is deenergized in step S2. Next, after a specified inertial rotation time T2 elapsed since the deenergizing, the induction motor 72 is energized in the backward direction in step S3. After a specified driving time T3 elapsed since the energizing, the induction motor 72 is deenergized in step S4. Then, after a specified inertial rotation time T4 elapsed since the deenergizing, the flow proceeds to step S5. In step S5, it is determined whether a specified process execution time T5 set for the washing process elapses since the beginning of the washing process (i.e., since the energizing in initial step S1). If the determination result is "not", the flow returns to step S1; and if the determination result is "yes", the flow is ended.

In other words, by taking the specified driving time T1 (T3) for the rotation part 80 and the specified inertial rotation time T2 (T4) until the rotation part 80 stops (i.e., until the agitating wing 63 stops) as working units, the reverse driving of the rotation part 80 is controlled repeatedly on the basis of each working unit.

In the present embodiment, the driving times T1, T3 are set as 1.3 seconds; the inertial rotation times T2, T4 are set as 1.5 seconds; and the process execution time T5 is set as 6 minutes. In contrast, in the situation of not adopting the structure of the transmission 8 in FIG. 2, the driving times T1, T3 are set as 1.3 seconds, the inertial rotation times T2, T4 are set as 0.5 second, and the process execution time T5 is set as 4 minutes. Relative to FIG.2, the driving times T1 and T3 are identical to that set in FIG. 2, the inertial rotation times T2, T4 are prolonged so as to adapt the extension of time, which is due to the increase of the inertial weight generated by incorporation of the transmission 8, required from the deenergizing to the stop of the induction motor 72 after the induction motor 72 is started. Along with the increase of the inertial weight, the followings increase: at the driving side, a difference of the weight of the pulleys 81 a, 81b and the rotating speed sensing part 81c forming the driving side pulley unit 81 in FIG. 1 relative to the weight of the driving side pulley 72a in FIG. 2; and at the driven side, a difference of the weight of the pulleys 82a, 82b and the spring 82c forming the driven side pulley unit 82 in FIG. 1 relative to the weight of the driven side pulley 73a in FIG. 2.

That is to say, in the structure in FIG. 1, when the rotation part 80 rotates in the backward direction for the inertial rotation time same as that of the fixed pulleys 72a and 73a (i.e., T2, T4=0.5 second), the rotation part 80 rotates in the backward direction during the inertial rotation, resulting in higher power consumption. However, if the inertial rotation times T2, T4 are set as 1.5 seconds and the rotation part 80 rotates in the backward direction after it stops, then no power waste is caused and the inertial rotation caused by the inertial weight can be effectively used for washing. Moreover, according to such setting, since the speed of the induction motor 72 may be 0 each rotation, the torque multiplication occurred during each startup may be utilized.

Next, the above specified times T1, T3 during the startup are set longer enough so that the gear ratio of the transmission is changed from the maximum of 1: 3.4 to the minimum of 1: 1.7. That is to say, in the case that the induction motor 72 is adopted, although the current value cannot be controlled, the reduction of the power consumption can be realized in the present embodiment as follows: when the induction motor 72 is started, after the induction motor 72 is efficiently started, the transmission 8 changes the gear ratio and reaches the rotating speed required for the rotation part 80; at this moment, the induction motor 72 also reaches the high rotation region, thus a time ratio of the region with high motor efficiency is increased.

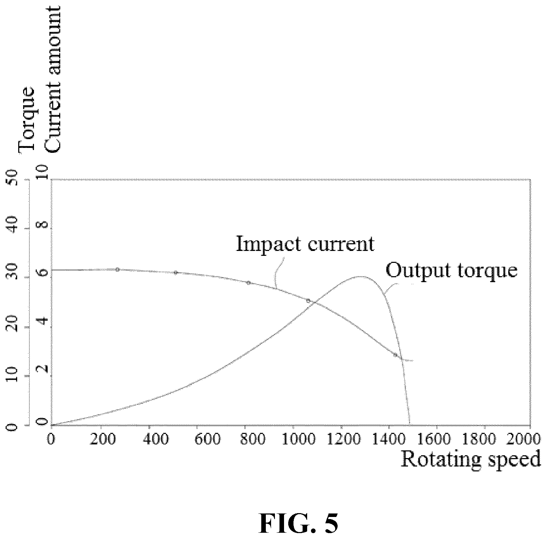

FIG. 5 is a chart illustrating characteristics of impact current and torque relative to the rotating speed. Although the induction motor cannot be efficiently operated since the impact current is large and the induction motor has low output torque in the region with low rotating speed, the impact current is decreased and the output torque is increased instead when the rotating speed becomes high. According to the present embodiment, the torque at the input shaft 72m side is multiplied by the transmission 8, and the low-efficiency low rotation region is rapidly passed through and the induction motor can operate efficiently in the high rotation region.

Although an embodiment of the present disclosure is described above, specific structures of all parts are not limited to the above-mentioned embodiments.

For example, a motor driving flow is described by taking the washing process as an example in above embodiments, but the flow on this basis can be executed in the rinsing process.

In addition, the driving time, the inertial rotation time, the maximum gear ratio, the minimum gear ratio and the like are not limited to above specific values.

Further, since the output torque is multiplied by adopting the transmission, a small and cheap motor can be adopted.

Various variations can also be made to other structures without departing from the scope of the technical spirit of the present disclosure.

## Claims

1. A washing machine, comprising:
an input shaft configured to supply rotation power to a rotation part that rotates washings;
an induction motor, wherein the induction motor is configured to rotate in a forward direction and a backward direction and is served as a power source of the rotation part; and
a transmission arranged between an output shaft of the induction motor and the input shaft of the rotation part, wherein the transmission is configured to change speed of the induction motor by decreasing a reduction ratio along with startup of the induction motor.

2. The washing machine according to claim 1, wherein the transmission comprises:
a variable driving side pulley unit arranged on a side of the output shaft;
a variable driven side pulley unit arranged on a the side of the input shaft; and
a driving belt capable of transferring the power between the variable driving side pulley unit and the variable driven side pulley unit,
wherein the transmission is configured to change a pulley diameter ratio according to rotating speed of the output shaft or the input shaft.

3. The washing machine according to claim 2, further comprising a control part for driving the induction motor via a driver,
wherein the control part is configured to, by taking a specified driving time preset for the rotation part and a specified inertial rotation time until the rotation part stops as working units, drive the rotation part in the backward direction repeatedly on the basis of each of the working units.

4. The washing machine according to claim 3, wherein
the specified driving time is set to be equal to or longer than a time during which change a gear ratio of the transmission changes from a maximum to a minimum.
